Europäisches Patentamt

**European Patent Office**

Office européen des brevets

(11) Veröffentlichungsnummer: **0 027 493**
**B1**

(12) **EUROPÄISCHE PATENTSCHRIFT**

(45) Veröffentlichungstag der Patentschrift:
**02.03.83**

(51) Int. Cl.³: **C 01 B 7/19**

(21) Anmeldenummer: **80102930.7**

(22) Anmeldetag: **27.05.80**

(54) **Verfahren und Vorrichtung zur Gewinnung von Fluorwasserstoff aus fluorhaltigen Materialien durch Pyrohydrolyse.**

(30) Priorität: **20.10.79 DE 2942439**

(43) Veröffentlichungstag der Anmeldung:
**29.04.81 Patentblatt 81/17**

(45) Bekanntmachung des Hinweises auf die Patenterteilung:
**02.03.83 Patentblatt 83/9**

(84) Benannte Vertragsstaaten:
**CH FR GB IT LI NL SE**

(56) Entgegenhaltungen:
**DD-B-111 357**
**DE-B-1 904 391**
**US-A-3 073 676**
**US-A-4 160 809**

(73) Patentinhaber: **VEREINIGTE ALUMINIUM-WERKE AKTIENGESELLSCHAFT,**
**Postfach 2468 Georg-von-Boeselager-Strasse 25,**
**D-5300 Bonn 1 (DE)**

(72) Erfinder: **Krüger, Jörg, Dr., Geranienweg 22,**
**D-8460 Schwandorf (DE)**
Erfinder: **Thome, Roland, Dr., Brüsseler Strasse 58,**
**D-5300 Bonn 1 (DE)**
Erfinder: **Moritz, Dieter, Schubertstrasse 23,**
**D-4670 Lünen (DE)**
Erfinder: **Bings, Hubert, Friedenstrasse 3, D-4670 Lünen (DE)**
Erfinder: **Losert, Herbert, Moltkestrasse 64,**
**D-4670 Lünen (DE)**

(74) Vertreter: **Müller-Wolff, Thomas, Dipl.-Ing.,**
**Georg-von-Boeselager-Strasse 25 Postfach 2468,**
**D-5300 Bonn 1 (DE)**

# Verfahren und Vorrichtung zur Gewinnung von Fluorwasserstoff aus fluorhaltigen Materialien durch Pyrohydrolyse

Die Erfindung betrifft ein Verfahren zur Gewinnung von Fluorwasserstoff aus fluorhaltigen Materialien durch Pyrohydrolyse bei Temperaturen über 600°C, wobei in einem Drehrohrofen der erhitzte Materialstrom einem hohen Wasserdampfpartialdruck ausgesetzt wird.

Die Pyrohydrolyse von fluorhaltigen Materialien im Drehrohr ist nur unter bestimmten Voraussetzungen wirtschaftlich durchführbar. Die Reaktion muß innerhalb eines eng begrenzten Temperaturbereiches durchgeführt werden, da bei zu niedrigen Temperaturen keine vollständige Reaktion erfolgt und bei zu hohen Temperaturen der kontinuierliche Betrieb durch Schlackenbildung bzw. Verkrustungen gestört wird. Eine vollständige Reaktion setzt ferner voraus, daß die beteiligten Reaktionspartner bei den richtigen Temperaturen eine bestimmte zeitlang in Kontakt gebracht bzw. gehalten werden. Dieses gilt für jeden Teil und jede Phase des Prozeßstroms. Schließlich ist es erstrebenswert, als Pyrohydrolyseprodukt eine möglichst hochprozentige Flußsäure zu erhalten.

Nur unter diesen Bedingungen ist eine wirtschaftliche Weiterverarbeitung beispielsweise zu Kryolith möglich. Dabei sind Energieverbrauch und Umweltbelastung möglichst gering zu halten.

Ein Sonderverfahren zur Abtrennung von geringsten Fluormengen aus festen Materialien niedriger Fluorausgangskonzentration ist aus der DD-PS 111 357 bekannt. Bei Temperaturen über 600°C, die durch einen Brenner im Drehrohr erzeugt werden, wird der erhitzte Materialstrom einer partiell begrenzten Atmosphäre mit hohem Wasserdampfpartialdruck ausgesetzt. Der Wasserdampfpartialdruck soll durch einen auf den Materialstrom gerichteten pulsierenden Wasserstrahl im Drehrohr erzeugt werden. Durch die Drehbewegung des Ofens soll der Wasserdampf mit allen Teilen der Beschickung in Kontakt gebracht werden, so daß eine weitgehende Fluorentfernung erreicht wird.

Das bekannte Verfahren erlaubt zwar die Pyrohydrolyse bei relativ hohem Wasserdampfpartialdruck. Jedoch liegt dieser Partialdruck wegen der pulsierenden Wassermassen nicht kontinuierlich vor. Ferner wird in der Reaktionszone durch Einspritzung großer Wassermengen ein Kühleffekt erreicht, der für die Prozeßökonomie nicht förderlich ist. Dabei ist darauf hinzuweisen, daß große Wärmemengen mit dem pyrohydrolysierten Material aus dem Drehrohr entfernt werden. Insgesamt läuft daher die Reaktion bei dem bekannten Verfahren relativ langsam und energieaufwendig ab.

Aus der DE-B-1 904 391 ist ein Verfahren zur Rückgewinnung von Fluor aus festen, kohlenstoffhaltigen Abfallstoffen bekannt. Dabei werden die Abfallstoffe mit einer bestimmten Korngröße in einem Wirbelbett durch ein vorgewärmtes Luft-Wasserdampf-Gemisch auf eine Reaktionstemperatur von wenigstens 1000°C erhitzt. In der Wirbelschicht findet eine Rückvermischung statt, so daß das abgezogene Produkt etwa die Zusammensetzung des reagierenden Produktes hat. Infolge der Rückvermischung verringern sich die Konzentrationsgefälle zwischen den zur Reaktion gebrachten Partnern. Dieses hat zur Folge, daß bei angestrebter hoher Fluorausbeute geringe Fluorkonzentrationen im Auslauf und damit auch im Reaktionssystem vorliegen müssen. Dadurch werden wiederum die Umsatzgeschwindigkeiten der Reaktionsprodukte niedrig gehalten.

Ferner ist es für den Betrieb einer Wirbelschicht-Pyrohydrolyse erforderlich, ein bestimmtes Kornspektrum des zu behandelnden Produktes einzuhalten. Feinanteile verlassen u. U. die Wirbelschicht zu schnell und müssen abgetrennt oder gemeinsam mit den zu verarbeitenden Produktteilen brikettiert, gebrochen und gesiebt werden. Daraus ergibt sich, daß eine aufwendige Vorbereitung bei der Produkteingabe in die Wirbelschicht notwendig ist.

Aus der US-A-3 073 676 ist ein Verfahren zur Wiedergewinnung von Fluorverbindungen aus festen Rückständen der Pyrohydrolyse bekannt. Dabei werden die Rückstände bei Temperaturen von 600—1100°C in einem Schacht mit Wasserdampf und einem Verdünnungsgas, wie Luft, Sauerstoff oder Stickstoff behandelt.

Die Verwendung eines Verdünnungsgases hat den Nachteil, daß der Wasserdampf-Partialdruck verringert wird und die Reaktionsgeschwindigkeit dadurch absinkt. Ferner muß beim Betreiben eines Schachtes darauf geachtet werden, daß ein definiertes Kornspektrum der Feststoffpartikel vorliegt, damit eine gleichmäßige Durchströmung des Gases möglich ist. Falls das Produkt während der Behandlung zerfällt oder agglomeriert, wird der Reaktionsablauf gestört.

Aufgabe der vorliegenden Erfindung ist es, bei der Pyrohydrolyse von fluorhaltigem Material im Drehrohr den Gas- und Materialstrom so zu steuern, daß der Fluorgehalt des Ausgangsmaterials in energiesparender Weise möglichst vollständig abgetrennt und ein reines, angereichertes, kieselsäurearmes Produkt erhalten wird.

Erfindungsgemäß geschieht das dadurch, daß ein kohlenstofffluorhaltiges Material im Gegenstrom zu einem rotierenden Sauerstoff-Wasserdampf-Gemisch geführt und anschließend mit rotierendem Wasserdampf behandelt wird.

Die erfindungsgemäß rotierenden Gasströme sollen eine bestimmte Strömungsverteilung über den Reaktionsraum bewirken. Die Rotationsebene liegt im wesentlichen senkrecht zur Strömungsrichtung des kohlenstoff-fluorhaltigen Feststoffs. Es sind zwei verschiedene Gasströme vorhanden:

1. ein relativ heißes Sauerstoff-Wasserdampf-Gemisch, mit dem das kohlenstoff-fluorhaltige Material im Gegenstrom aufgeheizt und teilweise pyrohydrolysiert wird,

2. ein reiner Wasserdampfstrom, mit dem das teilreagierte Produkt vollständig pyrohydrolysiert und im Gegenstrom abgekühlt wird.

Im Übergangsbereich zwischen dem reinen Wasserdampf und dem Sauerstoff-Wasserdampf-Gemisch, etwa in der Mitte der Reaktionszone, wird sauerstoffhaltiges Gas eingeblasen. Dabei ergibt sich ein steiler Temperaturanstieg durch Abbrennen von Wassergas. Durch die erfindungsgemäßen Maßnahmen wird ein sehr guter Stoff- und Wärmeübergang zwischen dem kohlenstoff-fluorhaltigen Material einerseits und dem Wasserdampf-Luft-Gemisch andererseits ermöglicht.

Bei der Durchführung des Verfahrens im Drehrohrofen ergeben sich zwei Gasatmosphären, die durch die Einspeisung des sauerstoffhaltigen Gases voneinander getrennt sind. Am oberen Ende des Drehrohrs befindet sich der Reaktionsteil mit oxidierender Atmosphäre und mittlerem Wasserdampfgehalt, während am unteren Ende eine Zone mit reduzierender Atmosphäre und sehr hohem Wasserdampfgehalt festzustellen ist. Im oxidierenden Teil wird durch Abbrennen von Kohlenstoff bzw. Wassergas Energie freigesetzt. I... reduzierenden Teil erfolgt eine dem verbleibenden Kohlenstoffgehalt entsprechende Wassergasreaktion. Diese Prozeßführung erlaubt eine Fluorabspaltung über die gesamte Drehrohrlänge, wobei am Ende des reduzierenden Teils ein praktisch fluorfreier Feststoff anfällt.

Die Wärme, die für die Deckung der endothermen Reaktion im reduzierenden Teil benötigt wird, gelangt durch den in der oxidierenden Zone hoch erhitzten Feststoff dorthin. Der Feststoff und der rotierende Wasserdampf werden in der Kontaktzone intensiv vermischt, ohne daß dabei Staub aufwirbelt. Dadurch wird der Staubanteil des Abgases äußerst gering gehalten.

Durch die gezielte Sauerstoffzufuhr zwischen der oxidierenden und der reduzierenden Zone kann die Lage des Temperaturmaximums genau bestimmt werden. Dieses wirkt sich günstig auf die Prozeßökonomie aus, da nur ein kleiner Teil der Wärme mit dem Abgas bzw. dem ausgetragenen Feststoff verloren geht. Die besondere Prozeßführung ermöglicht es ferner, daß trotz der relativ hohen Reaktionstemperaturen von 1200 bis 1800°C eine Verklinkerung des kohlenstoff-fluorhaltigen Materials weitgehend vermieden wird.

Im folgenden wird das Verfahren anhand eines Ausführungsbeispiels beschrieben. Es zeigt

Fig. 1 prinzipielle Darstellung der Gesamtanlage,

Fig. 2 Prinzipbild eines Drehrohres der erfindungsgemäßen Art im Längsschnitt.

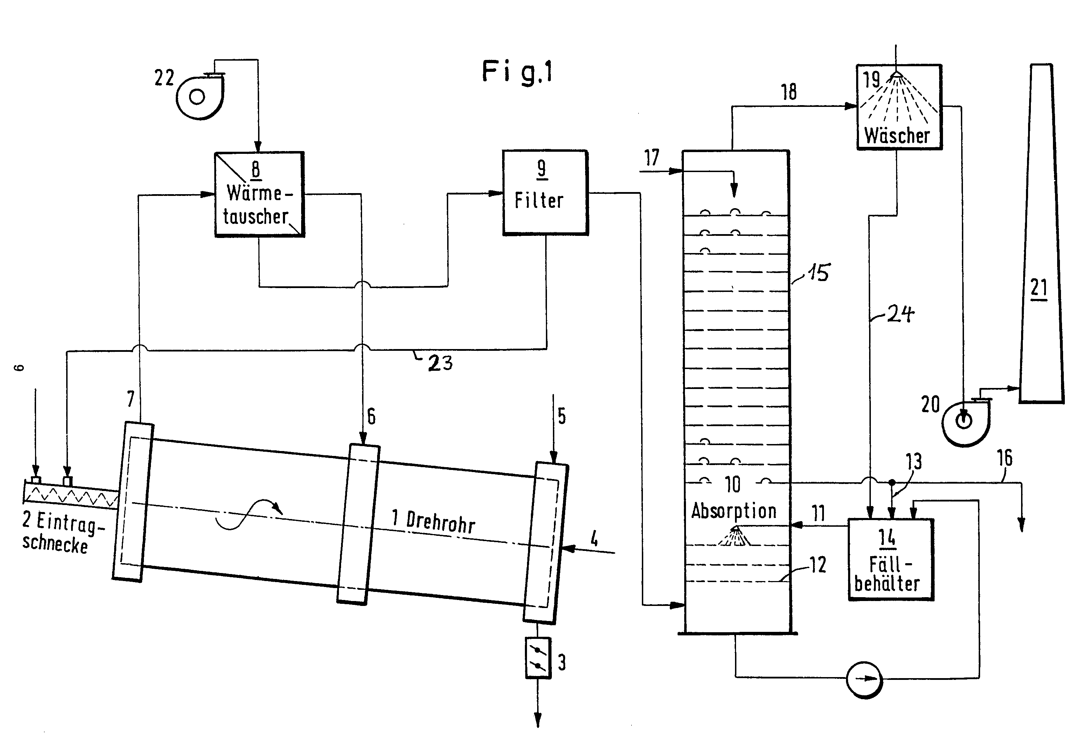

In Fig. 1 ist das Drehrohr 1 mit der Eingabeschnecke 2 (oberes Ende) für kohlenstoff- und fluorreiche Materialien und der Pendelklappe 3 (unteres Ende) für das austretende, abreagierte, kohlenstoff- und fluorfreie Material gezeigt. Über die Leitung 4 wird Primärdampf und über die Leitung 5 Sekundärdampf in das Drehrohr 1 eingespeist. Etwa in der Mitte des Drehrohrs 1 befindet sich die Eingabestelle 6 für das sauerstoffhaltige Gas, im Normalfall Luft.

Das mit Fluorwasserstoff beladene Abgas des Verfahrens wird über die Leitung 7 abgezogen und in den Wärmetauscher 8 geführt. Das im Wärmetauscher 8 abgekühlte Gas wird über einen Gewebefilter 9 geleitet. Das Reingas aus dem Gewebefilter wird in die Absorptionseinheit 10 geführt. In der Absorptionseinheit 10 wird das Gas mit einem Wasch- und Quenchwasser aus Kreislaufleitung 11 auf Absorptionstemperatur gebracht und auf Regensiebböden 12 gewaschen. Über den Anschluß 16 wird die Produktsäure entnommen. Der Wasch- und Quenchkreislauf wird über die Leitung 13 durch HF-beladenes Absorptionswasser (=verdünnte Flußsäure) gespeist und im Fällbehälter 14 gereinigt. Im Absorptionsteil 15 der Absorptionseinheit 10 strömen das Absorptions- und das Quenchwasser über die Leitung 17 dem Abgas entgegen. Das nahezu fluorfreie Abgas wird über die Leitung 18 in den Naß-Wäscher 19 gesaugt und von dort mit dem Ventilator 20 in den Kamin 21 gedrückt.

Über einen Ventilator 22 wird Luft durch den Wärmetauscher 8 in die Eingabestelle 6 gedrückt. Der vom Filter 9 abgeschiedene Feststoff kann über den Transportweg 23 in den Ofen zurückgeführt werden. Über die Leitung 24 wird ein Teil der Waschflüssigkeit in den Fällbehälter 14 geführt.

Über die Schnecke 2 wird das zu behandelnde Produkt gemeinsam mit einem Inertmaterial in den Pyrohydrolyseofen 1 gefahren. Die Inertmaterialmenge wird so groß gewählt, daß der Feststoffstrom etwa den gleichen Wärmekapazitätsstrom hat wie das entgegenströmende Abgas. Vorteilhaft wird als Inertmaterial abreagiertes Produkt benutzt. Die Abgasstrommenge ergibt sich als Summe der nötigen Verbrennungsluft und Pyrohydrolysedampfmengen. Im Drehrohrofen 1 erwärmt sich das Feststoffgemisch an dem entgegenströmenden Gas auf die Zündtemperatur des Kohlenstoffs. Der Kohlenstoff brennt bei Zugabe des Sauerstoffs weitgehend ab, ein Teil der Fluorverbindungen wird gespalten. Nachdem das teilreagierte, auf hohe Temperaturen erhitzte Produkt die Lufteintrittsstelle 6 passiert hat, tritt es in eine Atmosphäre, die hauptsächlich aus Wasserdampf besteht. Hierdurch treten eine dem verbleibenden Kohlenstoff entsprechende Wasserdampfreaktion und eine verstärkte Fluoraustreibung ein. Da diese Reaktionen endotherm sind, verliert der Feststoff an Temperatur. Auf dem weiteren Weg zur Pendelklappe 3 gibt das Produkt einen weiteren Teil seiner fühlbaren Wärme an den entgegenströmenden Wasserdampf ab. Die restliche verbleibende Wärme des Feststoffs wird zur Erzeugung des im Prozeß benötigten Wasserdampfes genutzt.

Der Primärdampf wird tangential in Umfangsrichtung des Drehrohrs 1 eingeblasen und erzeugt eine Drallströmung im gesamten Drehrohr. Der Sekundärdampf wird durch besonders intensiven Wärmetausch an dem austretenden Feststoff erhitzt. Der Dampf reagiert — wie bereits beschrieben — mit dem Produkt und bildet zunächst Wassergas und Fluorwasserstoff. Durch Dosieren von Luft in den Sekundärdampf kann das entstandene Wassergas und der Kohlenstoff direkt und zum Teil unter einer Zwischenbildung von Wassergas abgebrannt werden.

Das Gas gibt vor dem Verlassen des Ofens bis zu ca. 80% der Wärme an den Feststoff ab. Bei diesem Vorgang ist es besonders vorteilhaft, daß durch die Drallströmung der Wärme- und Stoffübergang sehr hoch ist. Das mit geringem Restgehalt von Staub und Kieselfluorwasserstoffsäure beladene fluorhaltige Abgas wird im Wärmetauscher 8 auf Gewebefiltertemperaturen abgekühlt. Auf dem Gewebefilter 9 werden der Reststaub und die Kieselfluorwasserstoffsäure, die bei den dort vorliegenden Bedingungen durch Hydrolyse weitgehend zu $SiO_2$ abgebaut wird, abgeschieden.

In der nachgeschalteten Absorptionseinheit wird das nahezu staub- und kieselsäurefreie Produkt mit verdünnter Flußsäure behandelt. Hierbei gehen die Kieselsäure und der Reststaub in den Quench- und Waschkreislauf über. Durch Fällung und Abscheiden wird erreicht, daß die Substanzen sich nicht zu stark anreichern. Zur Fällung wird die fluorsalzhaltige Waschlösung aus dem Naßwäscher 19 benutzt.

In der Absorptionseinheit wird das Abgas im Gegenstrom mit Absorptions- und Quenchwasser von den fluorhaltigen Bestandteilen gereinigt. Aus dem fluorbeladenen Quench- und Absorptionswasser (=verdünnte Flußsäure) wird über den Anschluß 16 des Absorptionsteils die Produktsäure entnommen. Das Quenchwasser wird zur Deckung der Wasserverluste des Quench- und Waschkreislaufs diesem Kreislauf zugeführt.

Das nahezu fluorfreie Abgas aus der Kolonne wird in einem alkalischen Naßwäscher gewaschen. Hierbei entsteht bei Wäsche mit verdünnter Natronlauge NaF. Diese Lösung kann zum Teil zur Fällung der Kieselsäure eingesetzt werden.

Die im Wärmetauscher 8 anfallende Wärme wird zur Vorwärmung der Verbrennungsluft genutzt und erlaubt somit hohe Reaktionstemperaturen. Der Staub aus dem Gewebefilter wird dem Produkt in der Eingabeschnecke 2 zugemischt.

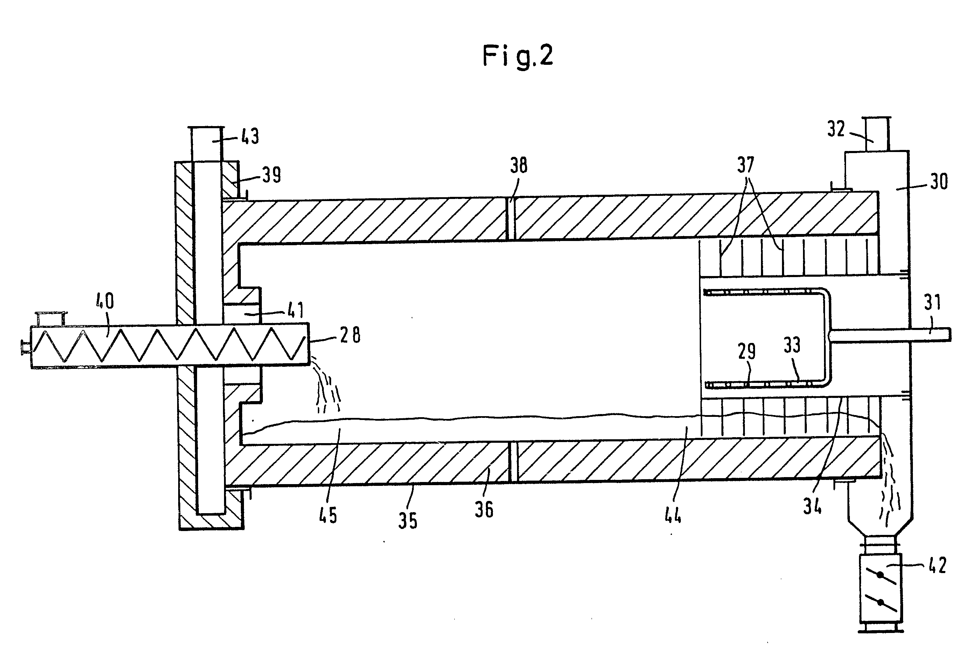

Gemäß Fig. 2 ist der untere Drehrohrkopf 30 mit einer Dampfleitung 31 für Primärdampf und einem Anschlußstutzen 32 für Sekundärdampf versehen. Die Dampfleitung 31 mündet in einem gabelförmigen Düsenrohr 33, das von einem konzentrischen Gasleitrohr 34 umgeben ist. Die Düsen sind so angeordnet, daß der Dampf, bezogen auf das Drehrohr 35 und das Gasleitrohr 34, tangential austritt. Das konzentrische Gasleitrohr ist so angeordnet, daß der Sekundärdampf zwischen dem Gasleitrohr 34 und der Ausmauerung 36 des Drehrohrs 35 entlangströmen muß. Zwischen der Ausmauerung 36 des Drehrohrs 35 und dem Gasleitrohr 34 sind Regeneratorplatten 37 angebracht. Die Anordnung der Platten ist ähnlich der Anordnung von Schaufeln in einem Axialverdichter. Die Steigung wird so gewählt, daß im Einzugsteil ein fördernder und im Austrittsteil ein stauender Einfluß auf den Feststoff ausgeübt wird. Im mittleren Teil sind die Regeneratorplatten 37 auf neutrale Feststoffförderung eingestellt. Die Platten 37 sind von der Geometrie der Anordnung und vom Material her so gewählt, daß ein besonders guter Wärmeübergang vom Feststoff auf die Platten erfolgen kann, die Wärme dort schnell gespeichert und wieder abgegeben werden kann und der Wärmeübergang von den Platten auf den Dampf besonders intensiv ist.

Etwa in der Mitte des Drehrohrs 35 tritt Luft durch die Sauerstoffstutzen 38 in den Drehrohrofen. Die Stutzen sind so, daß der vom Primärdampf erzeugte Drall erhalten bleibt. Auch die Zugabemenge des Sauerstoffgases muß ebenso wie die Anzahl der Stutzen geregelt werden. Durch die Geometrie der Lufteintrittsstutzen wird erreicht, daß dort kein Feststoff austritt.

Am oberen Drehrohrkopf 39 wird der zu behandelnde Feststoff zentrisch über eine Schnecke 40 aufgegeben. Der Abgasstutzen 43 ist über den Drehrohrkopf 39 mit einer relativ engen konzentrischen Gasaustrittsöffnung 41 verbunden. Das abreagierte Material 44 verläßt über die Pendelklappe 42 den Ofen.

Über die Schnecke 40 wird das kohlenstoff- und fluorreiche Material 45 mit einer bestimmten Menge an Inertmaterial vermischt in den Ofen gefahren. Dieses Gemisch, dessen Wärmekapazitätsstrom etwa gleich dem Abgasstrom sein soll, wird durch das entgegenströmende Abgas aufgeheizt. Durch das drallförmig strömende Abgas wird gemäß dem Energieerhaltungssatz beim Eintritt in den konzentrischen Spalt der Gasaustrittsöffnung 41 eine starke tangentiale Beschleunigung hervorgerufen. Hierdurch wird verhindert, daß der Feststoff, der über die Schnecke 40 dosiert wird, den Drehrohrofen sofort wieder verläßt. Die Strömungsverhältnisse sind ähnlich denen eines Zyklons.

Der Kohlenstoff und ein Teil der fluorhaltigen Verbindungen reagieren nach Erreichen der Zündtemperatur des Kohlenstoffs mit der Luft und dem Wasserdampf. Diese Reaktion ist eine exotherme Reaktion und liefert die gesamte Energie für das Verfahren. Beim Passieren der Sauerstoffstutzen 38 hat das Produkt die höchste Temperatur erreicht. Danach liegt eine reine Wasserdampfatmosphäre vor und führt zur endothermen Wassergasreaktion. Bei dem hohen Wasserdampfpartialdruck setzt gleichzeitig die Fluorabspaltung voll ein. Das freigesetzte Wassergas strömt in den oberen Teil des Drehrohrs und brennt dort ab. Der Produktstrom kühlt sich sowohl durch diese endothermen Reaktionen als auch durch den Wärmetausch mit dem Dampf ab. Durch den Einsatz der Regeneratorplatten 37 ist dieser Wärmeübergang besonders intensiv, ohne daß dabei eine nennenswerte Staubentwicklung auftritt. Die Regeneratorplatten 37 werden im Produktstrom über die jeweilige zeitlich mittlere Temperatur erhitzt, geben danach die Wärme an den Sekundärdampf ab und kühlen sich dadurch unter die jeweilige zeitlich mittlere Temperatur ab.

Der in bestimmter Weise eingeblasene Primärdampf erzeugt einen Drallstrom, der zusammen mit dem Sekundärdampf und sauerstoffhaltigen Gas durch das gesamte Drehrohr läuft. Der Drallstrom ermöglicht die Einstellung von sehr hohen Wärme- und Stoffübergangsbedingungen, unabhängig von der axialen Gasgeschwindigkeit im Drehrohr 35.

Die axiale Gasgeschwindigkeit ist eine Funktion der Gasvolumenströme und der Drehrohrgeometrie. Die Gasvolumenströme sind durch stöchiometrische Verbrennung von Kohlenstoff und einem bestimmten Verhältnis zu Fluor festgelegt. Die erfindungsgemäße Lösung ermöglicht bei beliebigen axialen Geschwindigkeite einen guten Stoff- und Wärmeaustausch durch Erhöhung der tangentialen Komponente der Gasgeschwindigkeit in Form einer Drallströmung.

Der Begriff »Inertmasse« wird für solches Material verwendet, das bei den während der Pyrohydrolyse herrschenden Bedingungen nicht reagiert — also »inert« bleibt. Hierzu zählen Korund und Natriumaluminat.

Die in der Mitte des Drehrohrs herrschenden hohen Temperaturen werden durch Abbrennen von Wassergas erzeugt. Die Wassergasmenge ist äquivalent der Kohlenstoffmenge, die in der reduzierenden Zone des Ofens mit Wasserdampf abreagiert.

Wird als Ausgangsprodukt der Ausbruch aus Elektrolysezellen der Aluminiumerzeugung eingesetzt, so kann der ausreagierte Feststoff, der im wesentlichen aus Aluminium und Natrium sowie den entsprechenden Oxiden besteht, wieder im Bayer-Verfahren für die Aluminiumoxiderzeugung eingesetzt werden.

## Patentansprüche

1. Verfahren zur Gewinnung von Fluorwasserstoff aus fluorhaltigen Materialien durch Pyrohydrolyse bei Temperaturen über 600°C, wobei in einem Drehrohrofen der erhitzte Materialstrom einem hohen Wasserdampfpartialdruck ausgesetzt wird, dadurch gekennzeichnet, daß ein kohlenstoff-fluorhaltiges Material im Gegenstrom zu einem rotierenden Sauerstoff-Wasserdampf-Gemisch geführt und anschließend mit rotierendem Wasserdampf behandelt wird.

2. Verfahren nach Anspruch 1, dadurch gekennzeichnet, daß das Sauerstoff-Wasserdampf-Gemisch durch Einblasen von sauerstoffhaltigem Gas in den rotierenden Wasserdampfstrom hergestellt wird.

3. Verfahren nach einem der vorhergehenden Ansprüche, dadurch gekennzeichnet, daß das sauerstoffhaltige Gas in einer Menge zugegeben wird, die ausreicht, um den Kohlenstoffgehalt des fluorhaltigen Materials vollständig zu verbrennen.

4. Verfahren nach einem der vorhergehenden Ansprüche, dadurch gekennzeichnet, daß zu dem kohlenstoffhaltigen Material eine Inertmasse in einem Gewichtsverhältnis von 1 : 6 bis 1 : 7 zugegeben wird.

5. Verfahren nach einem der vorhergehenden Ansprüche, dadurch gekennzeichnet, daß die Pyrohydrolyse bei Temperaturen von 1200 bis 1800°C durchgeführt wird.

6. Verfahren nach einem der vorhergehenden Ansprüche, dadurch gekennzeichnet, daß das Abgas aus der Pyrohydrolyse gefiltert und dabei feste Kieselsäure aus dem Abgas entfernt wird.

7. Verfahren nach einem der vorhergehenden Ansprüche, dadurch gekennzeichnet, daß das Abgas mit kieselsäurearmer Flußsäure gewaschen wird.

8. Verfahren nach einem der vorhergehenden Ansprüche, dadurch gekennzeichnet, daß die in der Flußsäure angereicherte Kieselsäure mit Alkalien gefällt wird.

9. Verfahren nach einem der vorhergehenden Ansprüche, dadurch gekennzeichnet, daß der Wasserdampf in einer Ebene senkrecht zur Strömungsrichtung des kohlenstofffluorhaltigen Materials rotiert.

10. Vorrichtung zur Gewinnung von Fluorwasserstoff aus fluorhaltigem Material durch Pyrohydrolyse, bestehend aus einem Drehrohr mit Eintragsvorrichtung für kohlenstoff-fluorhaltiges Material und Gasaustrittsöffnungen, dadurch gekennzeichnet, daß in das Drehrohr am unteren Ende eine Dampfleitung hineinragt, die in Umfangsrichtung des Drehrohrs exzentrisch angeordnete Düsenöffnungen aufweist und zwischen Eintragsöffnung und Düsenöffnungen der exzentrisch angeordneten Dampfleitung eine Sauerstoffeinspeisung angeordnet ist.

11. Vorrichtung nach Anspruch 10, dadurch gekennzeichnet, daß die Dampfleitung (31) am unteren Ende des Drehrohrs (35) in einem zentrischen Gasleitrohr (34) angeordnet ist und zwischen Gasleitrohr (34) und Ausmauerung (36) des Drehrohrs eine Zusatzdampfeinspeisung vorgesehen ist.

12. Vorrichtung nach Anspruch 10 oder 11, dadurch gekennzeichnet, daß zwischen dem Gasleitrohr (34) und der Ausmauerung (36) Regeneratorplatten (37) angeordnet sind.

13. Vorrichtung nach einem der Ansprüche 10 bis 12, dadurch gekennzeichnet, daß die Dampfleitung (31) in ein gabelförmiges Düsenrohr (33) mündet, das mit in Umfangsrichtung des Drehrohrs angeordneten Düsenöffnungen (29) versehen ist.

14. Vorrichtung nach einem der Ansprüche 10 bis 13, dadurch gekennzeichnet, daß die Sauerstoffeinspeisung (38) etwa in der Mitte des Drehrohrs angeordnet ist.

15. Vorrichtung nach einem der Ansprüche 10 bis 14, dadurch gekennzeichnet, daß die Regeneratorplatten (37) aus Strömungsleitblechen bestehen, die quer zur Strömungsrichtung des Zusatzdampfes ausgerichtet sind.

16. Vorrichtung nach einem der Ansprüche 10 bis 15, dadurch gekennzeichnet, daß als Eintragsvorrichtung eine Schnecke (40) vorgesehen ist.

17. Vorrichtung nach einem der Ansprüche 10 bis 16, dadurch gekennzeichnet, daß die Eintragsöffnung (28) der Eintragsvorrichtung um etwa eine Radiuslänge in den Drehrohrrinnenraum hineinragt.

18. Vorrichtung nach einem der Ansprüche 10 bis 17, dadurch gekennzeichnet, daß konzentrisch zur Eintragsvorrichtung eine Gasaustrittsöffnung (41) vorgesehen ist.

19. Vorrichtung nach einem der Ansprüche 10 bis 18, dadurch gekennzeichnet, daß die Gasaustrittsöffnung (41) um etwa den halben Drehrohrradius von der Eintragsöffnung (28) entfernt angeordnet ist.

## Claims

1. A process for producing hydrogen fluoride from fluorinecontaining materials by pyrohydrolysis at temperatures above 600°C, wherein the heated material is explosed in a rotary kiln to a high partial pressure of water vapour, the said solid heated material containing carbon and fluorine being introduced into an atmosphere containing oxygen and water vapour, and flowing in countercurrent to the said solid material, the said material being subsequently treated with a rotating flow of steam.

2. The process of claim 1, wherein the oxygen-containing gas is injected into the rotating flow of steam and produces a mixture of oxygen and steam.

3. A process according to one the preceding claims, which comprises introducing oxygen-containing gas in a sufficient quantity for burning completely the carbon content of the fluorine-containing materials.

4. A process according to one of the preceding claims, which comprises adding an inert material to the carbon-containing material in the ration of from 6 : 1 to 7 : 1 by weight.

5. A process according to one of the preceding claims, wherein the pyrohydrolyses is conducted at temperatures between 1200° and 1800°C.

6. A process according to one of the preceding claims, wherein the exhaust gas issuing from the pyrohydrolysis kiln is filtered and the solid silica thus removed from the exhaust gas.

7. A process according to one of the preceding claims, wherein the exhaust gas is washed by hydrofluoric acid which has a low content of silica.

8. A process according to one of the preceding claims, wherein the silica accumulated in the hydrofluoric acid is precipitated by addition of basic compounds to the said hydrofluoric acid.

9. A process according to one of the preceding claims, wherein the plane of rotation of the steam lies vertically to the direction of flow of the carbon and fluorine-containing material.

10. An apparatus for the production of hydrogen fluoride from fluorine-containing materials by pyrohydrolysis, which comprises a rotating cylinder having an inlet for charging the solid material containing carbon and fluorine, and outlets to discharge the gaseous products, wherein a steam pipe is inserted at the lower end of the said rotary cylinder, the said steam pipe being provided with eccentrically arranged nozzles discharging toward the circumferential wall of the said cylinder and wherein an oxygen feed is placed between the solids inlet and the jet end of the eccentrically positioned steam pipe.

11. The apparatus according to claim 10, wherein the said steam pipe (31) at the lower end of the rotating cylinder (35) is positioned in a centrally placed gas conduit (34), an additional steam inlet being inserted between the gas conduit (34) and the lining of the rotating cylinder.

12. Apparatus according to claim 10 or 11, wherein the regenerator plates (37) are placed between the gas conduit (34) and the lining (36) of the cylinder.

13. Apparatus according to one of the claims 10 to 12, wherein the steam pipe (31) ends with a forked jet tube (33) provided with nozzles (29) which are pointing toward the circumferential walls of the rotating cylinder.

14. Apparatus according to one of the claims 10 to 13, wherein the oxygen feed (38) is positioned almost in the center of the rotating cylinder.

15. Apparatus according to one of the claims 10 to 14, wherein the regenerator plates (37) consists of sheet-metal flights which are placed across the flow direction of the additional steam.

16. Apparatus according to one of the claims 10 to 15, wherein a screw conveyor (40) is used as feed device.

17. Apparatus according to one of the claims 10 to 16, wherein the inlet (28) of the feed device protrudes into the cylinder for a distance equal to about one radius of the cylinder.

18. Apparatus according to one of the claims 10 to 17, wherein a gas outlet (41) is disposed concentrically around the feed device.

19. Apparatus according to one of the claims 10 to 18, wherein the gaseous product outlet (41) is disposed around the inlet at a distance of about one-half of the radius of the rotating cylinder from the opening of the inlet.

## Revendications

1. Procédé pour obtenir du fluorure d'hydrogène à partir de matières fluorées par pyrohydrolyse à des température supérieures à 600°C, dans lequel on expose le courant de matière chauffé dans un four tubulaire rotatif à une forte pression partielle de vapeur d'eau, caractérisé en ce que l'on envoie une matière carbonée et fluorée à contre-courant d'un mélange oxygène-vapeur d'eau en rotation et on la traite ensuite par de la vapeur d'eau en rotation.

2. Procédé selon la revendication 1, caractérisé en ce que le mélange oxygène-vapeur d'eau est préparé par insufflation d'un gaz contenant de l'oxygène dans le courant de vapeur d'eau en rotation.

3. Procédé selon l'une des revendications qui précèdent, caractérisé en ce que le gaz contenant de l'oxygène est introduit en quantité suffisante pour la combustion complète du carbone contenu dans la matière fluorée.

4. Procédé selon l'une des revendications qui précèdent, caractérisé en ce que l'on ajoute à la matière contenant du carbone une masse inerte dans un rapport en poid de 1 : 6 à 1 : 7.

5. Procédé selon l'une des revendications qui précèdent, caractérisé en ce que la pyrohydrolyse est effectuée à des températures de 1.200° à 1.800°C.

6. Procédé selon l'une des revendications qui précèdent, caractérisé en ce que les gaz résiduaires de la pyrohydrolyse sont filtrés, ce qui permet d'éliminer la silice solide des gaz résiduaires.

7. Procédé selon l'une des revendications qui précèdent, caractérisé en ce que les gaz résiduaires sont lavés avec un acide fluorhydrique à faible teneur en silice.

8. Procédé selon l'une des revendications qui précèdent, caractérisé en ce que la silice accumulée dans l'acide fluorhydrique est précipitée à l'aide d'alcalis.

9. Procédé selon l'une des revendications qui précèdent caractérisé en ce que la vapeur d'eau est en mouvement de rotation dans un plan perpendiculaire à la direction d'écoulement de la matière contenant du carbone et du fluor.

10. Appareillage pour obtenir du fluorure d'hydrogène par la pyrohydrolyse d'une matière fluorée, consistant en un tube rotatif avec dispositif d'alimentation pour une matière carbonée et fluorée et les orifices d'évacuation de gaz, caractérisé en ce que, à l'extrémité inférieure du tube rotatif, pénètre un conduit de vapeur d'eau qui présente des orifices de tuyères en disposition excentrique dans la direction de périphérie du tube rotatif, et en ce qu'une alimentation en oxygène est disposée entre l'orifice d'introduction et l'orifice des tuyères du conduit de vapeur en disposition exentrique.

11. Appareillage selon la revendication 10, caractérisé en ce que le conduit de vapeur d'eau (31) est disposé à l'extrémité inférieure du tube rotatif (35) dans un tube de transport de gaz (34) en dispositif centrale et en ce qu'une alimentation additionelle en vapeur d'eau est prévue entre le tube de transport des gaz (34) et la garniture réfractaire (36) du tube rotatif.

12. Appareillage selon la revendication 10 ou 11, caractérisé en ce que l'on a disposé des plasques de régénération (37) entre le tube de transport des gaz (34) et la garniture réfractaire (36) du tube rotatif.

13. Appareillage selon l'une des revendications 10 à 12, caractérisé en ce que le conduit de vapeur d'eau (31) débouche dans un tube à tuyères (33) en forme de fourche, portant des orifices de tuyères (29) disposés dans la direction de la périphérie du tube rotatif.

14. Appareillage selon l'une des revendications 10 à 13, caractérisé en ce que l'alimentation en oxygène (38) est disposée à peu près au milieu du tube rotatif.

15. Appareillage selon l'une des revendications 10 à 14, caractérisé en ce que les plaques de régénération (37) consistant en déflecteurs d'écoulement dirigés obliquement par rapport à la direction d'écoulement de la vapeur additionelle.

16. Appareillage selon l'une des revendications 10 à 15, caractérisé en ce que le dispositif d'alimentation est une vis (40).

17. Appareillage selon l'une des revendications 10 à 16, caractérisé en ce que l'orifice d'alimentation (28) du dispositif d'alimentation pénètre dans la chambre intérieure du tube rotatif d'une distance qui représente à peu près une longueur de rayon.

18. Appareillage selon l'une des revendications 10 à 17, caractérisé en ce que l'on a prévu un orifice d'evacuation des gaz (41) concentrique par rapport au dispositif d'alimentation.

19. Appareillage selon l'une des revendications 10 à 18, caractérisé en ce que l'orifice de sortie des gaz (41) est disposé à une distance de l'orifice d'alimentation (28) qui représente à peu près la moitié du rayon du tube rotatif.

Fi g.1

22

8
Wärmetauscher

9
Filter

19
Wäscher

18

17

15

21

0 027 493

6

7

6

5

23

2 Eintragschnecke

1 Drehrohr

4

3

10
Absorption

11

12

24

13

20

16

14
Fällbehälter

# Fig.2

0 027 493